# EUROPEAN PATENT SPECIFICATION

(11) **EP 0 865 316 B1**
(45) Date of publication and mention of the grant of the patent: **10.03.2010**
(21) Application number: 96925515.7
(22) Date of filing: 25.07.1996
(51) Int. Cl.: B01J 31/12, B01J 37/00, B01J 37/02, C08F 210/16, C08F 4/658

(54) **CATALYST FOR THE MANUFACTURE OF POLYETHYLENE WITH A NARROW MOLECULAR WEIGHT DISTRIBUTION**
KATALYSATOR ZUR HERSTELLUNG VON POLYETHYLEN MIT ENGER MOLEKULARGEWICHTSVERTEILUNG
CATALYSEUR DESTINE A LA FABRICATION DE POLYETHYLENE PRESENTANT UNE REPARTITION SERREE DU POIDS MOLECULAIRE

(30) Priority: 06.10.1995 US 540143
(43) Date of publication of application: 23.09.1998
(73) Proprietor: ExxonMobil Oil Corporation, Fairfax, VA 22037 (US)
(72) Inventor: LOTTES, James, Frederic, Ambler, PA 19002 (US); MINK, Robert, Ivan, Warren, NJ 07059 (US); NOWLIN, Thomas, Edward, Cranbury, NJ 08512 (US); KISSIN, Yury, Viktorovich, East Burnswick, NJ 08816 (US)
(74) Representative: Samuels, Lucy Alice
(86) International application number: PCT/US1996/012303
(87) International publication number: WO 1997/012675

(56) References cited:
- EP-A- 0 261 808
- EP-A- 0 264 169
- WO-A-95/13873
- US-A- 4 335 016

## Description

A supported ethylene/α-olefin copolymerisation catalyst composition is prepared in a multi-step process according to the present invention. The process comprises forming a slurry by mixing a solid, porous silica carrier and a contact mixture of (1) an inert solvent, for instance a non-polar solvent free of any electron donor solvent (s) (2) an organomagnesium compound, the alkyl groups of which contain 4 to 10 carbon atoms, for example a compound of the formula RₘM_{g}R'ₙ where R and R' are the same or different alkyl groups, preferably C₄-C₈ alkyl groups, and more preferably both R and R' are butyl groups and m and n are each 0, 1 or 2, providing that m+n is equal to the valence of Mg; and (3) a tetraalkyl orthosilicate (TAOS) compound, the alkyl groups of which comprise 1 to 10 carbon atoms. The silica carrier has 0.4 to 0.9 mmol of hydroxyl (OH) groups per gram of silica. In addition, the dialkylmagnesium compound present in the contact mixture is added in an amount to provide a (Mg):(OH) molar ratio of 1.0 to 1.8, and the TAOS compound is added in an amount to provide a (TAOS):(Mg) molar ratio of 0.40 to 1.00.

The silica carrier is added to the contact mixture, which is itself free of precipitate, prior to the formation of a precipitate in said contact mixture. The resulting slurry is then heated with stirring to a temperature in the range of 40 to 65°C.

Titanium tetrachloride (TiCl₄) is then added to the heated slurry in an amount to provide a (Ti):(Mg) molar ratio of 0.7 to 1.4.

The catalyst precursor so-formed is incorporated into a catalyst composition, which is suitable for the copolymerisation of ethylene and an alpha-olefin of 3 to 10 carbon atoms, together with a trialkyl aluminium cocatalyst. The trialkyl aluminium cocatalyst activates the catalyst precursor.

The present invention is also directed to a catalyst composition obtainable by the above-described process.

The resulting activated catalyst composition has a higher productivity in the copolymerization of ethylene with alpha-olefins and improved alpha-olefin incorporation properties compared to similar catalyst compositions prepared without the TAOS. The catalyst can produce ethylene copolymers having relatively narrow molecular weight distributions and low densities.

The invention is, therefore directed to forming certain catalysts for ethylene-olefin copolymerization. In accordance with preferred embodiments of the invention, the proportions of the components of the catalyst precursor of the invention satisfy the equation K = [Ti]/([Mg] + 4[Si]) which is typically less than 0.4 and preferably 0.23 to 0.31. The "[Ti]", "[Mg]" and "[Si]" in the formula refer to the concentrations of Ti (provided by the TiCl₄) ; the concentration of Mg provided by the organomagnesium compound and the concentration of Si provided by the TAOS compound. The concentration of each is calculated in units of mmol/gram of silica support; outside of this K range, the toughness of the resins produced in polymerization reactions catalyzed by the catalysts of the invention and the strength of the films fabricated therefrom decline.

There are various processes for the preparation of catalyst compositions suitable for the copolymerisation of ethylene and alpha-olefins known in the art. For instance, WO-A-95/13873 discloses a process for the preparation of a ethylene copolymerisation catalyst which involves the impregnation of a porous support with an organomagnesium compound and the subsequent contacting of the magnesium-containing support with a silane compound. A transition metal component such as TiCl₄ is then incorporated into the support to provide a catalyst precursor. The precursor is then activated using a trialkylaluminium compound.

EP-A-0264169 discloses a process for the preparation of an ethylene-propylene copolymer, which involves the copolymerisation of ethylene and propylene monomers in the presence of a catalyst composed of a catalyst precursor and an organoaluminium compound. The catalyst precursor is made via contacting a metal oxide, which may be silica, with a dihydrocarbyl magnesium compound and a hydrocarbyloxy group-containing compound to provide an intermediate contact product. This intermediate is subsequently contacted with a halogen-containing alcohol to provide a further intermediate. This further intermediate is then contacted with a titanium-containing compound and, optionally, an electron donor compound, to provide a catalyst precursor.

Herein, a new process for the production of this type of catalyst is described. The new process is directed to optimizing the mixing of the components of the catalyst in order to maintain the activity/productivity of the catalyst in scale-up synthesis and commercial manufacture.
Catalysts produced by the process of the present invention may be described in terms of the manner in which they are made. Silica is used as the carrier material for the catalyst precursors Such a carrier material may be amorphous or crystalline. The carrier may be in the form of particles having a particle size of from 0.1µm to 250µm, preferably from 10 to 200µm, and most preferably from 10 to 80µm Preferably, the carrier is shaped in the form of spherical particles, e.g., spray-dried silica. The carrier material should be porous. The internal porosity of the carrier may be larger than 0.2 cm³/g. The specific surface area of the silica carrier material is at least 3 m²/g, preferably at least 50 m²/g, and more preferably from 150 to 1500 m²/g.

It is desirable to remove physically bound water from the silica carrier prior to contacting it with catalyst ingredients. This water removal may be accomplished by heating the carrier material to a temperature from about 100°C to the temperature at which sintering of the carrier occurs. A suitable range of temperatures may be from 100°C to 800°C, better from 150°C to 650°C.

As the chosen carrier is porous silica, silanol groups in the carrier may be present when the carrier is contacted with catalyst ingredients in accordance with the process of the present invention. The silanol groups are present in an amount from 0.4 to 0.9 mmol of OH groups per gram of carrier, and a preferred range is from 0.5 to 0.9 mmol of OH groups per gram of carrier. Excess OH groups present in the carrier may be removed by heating the carrier for a sufficient time at a sufficient temperature. A relatively small number of OH groups may be removed by heating the carrier from 150°C to 250°C, whereas a relatively large number of OH groups may be removed by heating at 500 to 800°C, most especially, from 550°C to 650°C. The duration of the heating may be from 4 to 16 hours. In a most preferred embodiment, the carrier is silica which, prior to the use thereof in the first catalyst synthesis step, has been dehydrated by fluidizing it by nitrogen or air and heating to at least 600°C for 4-16 hours to achieve a surface hydroxyl group concentration of about 0.7 mmol per gram. The surface hydroxyl concentration of silica may be determined according to J.B. Peri and A.L. Hensley, Jr., J. Phys. Chem., 72 (8), 2926 (1968). Internal porosity of carriers can be determined by a method termed the BET-technique, described by s. Brunauer, P. Emmett and E. Teller in Journal of the American Chemical Society, 60, pp. 209-319 (1938). Specific surface areas of carriers can be measured in accordance with the above-mentioned BET-technique with use of the standardized method as described in British Standards BS 4359, Volume 1, (1969). The silica of the most preferred embodiment is a high surface area, amorphous silica with the surface area = 300 m²/g and pore volume of 1.65 cm³/g. It is a material marketed under the tradenames of Davison 952 or Davison 955 by the Davison Chemical Division of W. R. Grace and Company. While heating is a preferred means of removing OH groups inherently present in the silica, other removal means are also possible such as chemical means. For example, a desired proportion of OH groups may be reacted with a chemical agent such as an organoaluminum compound, e.g., triethylaluminum.

The silica carrier material is slurried in a contact mixture containing an inert, e.g. non-polar, solvent, an organomagnesium compound and a TAOS compound described below. Preferably all subsequent steps for catalyst precursor preparation are conducted at temperatures of 25 to 80°C, preferably to 40 to 65°C to ensure maximum catalyst activity. For instance, once the slurry is formed, it is heated to 40 to 65°C.

Suitable non-polar solvents are materials in which all of the reactants used herein, e.g., the organomagnesium compound, the TAOS compound, and the TiCl₄, are at least partially soluble and which are liquid at reaction temperatures. Preferred non-polar solvents are alkanes, such as isopentane, n-hexane, isohexane, n-heptane, octane, nonane, and decane, although a variety of other materials including cycloalkanes, such as cyclohexane, aromatics, such as toluene and ethylbenzene, may also be employed. The most preferred non-polar solvents are isopentane, isohexane and heptane. As indicated above, the solvent should preferably be free of electron donors and electron donor solvents, because those electron donor(s) can react with the organomagnesium compound. prior to use, the non-polar solvent is preferably purified, such as by percolation through silica gel and/or molecular sieves, to remove traces of water, oxygen, polar compounds, and other materials capable of adversely affecting catalyst activity.

The organomagnesium compound has the empirical formula RₘMgR'ₙ where R and R' are the same or different C₄-C₁₀ alkyl groups, preferably C₄-C₈ alkyl groups, and more preferably both R and R' are butyl groups; and m and n are each 0, 1 or 2, providing that m + n is equal to the valence of Mg.

In the most preferred embodiment of the process of the invention it is important to add only such an amount of the organomagnesium compound that will be deposited - physically or chemically - onto the support, since any excess of the organomagnesium compound in the solution may react with other synthesis chemicals and precipitate outside of the support. The silica carrier drying temperature affects the number of sites on the carrier available for the organomagnesium compound - the higher the drying temperature the lower the number of sites. Thus, the exact molar ratio of the organomagnesium compound to the hydroxyl groups in the carrier will vary and must be determined on a case-by-case basis to assure that only so much of the organomagnesium compound is added as will be deposited onto the support without leaving any excess of the organomagnesium compound in the solution. Because the molar amount of the organomagnesium compound deposited onto the support is generally greater than the molar content of hydroxyl groups in the support, being a molar ratio of (mg) : (OH) of 1.0 to 7.8, the molar ratios given below are intended only as an approximate guideline and the exact amount of the organomagnesium compound in this embodiment must be controlled by the functional limitation discussed above, i.e., it must not be greater than that which can be deposited onto the support. The amount of the organomagnesium compound which is deposited onto the support can be determined by adding the organomagnesium compound to the slurry of the carrier until the organomagnesium compound is detected in the solvent.

For example, for the silica carrier heated at about 600°C, the amount of the organomagnesium compound added to the slurry is such that the molar ratio of Mg to the hydroxyl groups in the carrier is 1:1 to 1.8:1, preferably 1.1:1 to 1.8:1, more preferably 1.2:1 to 1.8:1 and most preferably 1.4:1.

The TAOS compound used in the production of the catalyst composition of the invention should be free of hydroxy groups. The TAOS compound is defined by Si(OR), wherein R is a C₁-C₁₀ alkyl group, preferably an alkyl group of 2 to 6 carbon atoms.

Specific TAOS compounds which can be used in accordance with the invention include tetramethoxysilane, tetraethoxysilane, tetraisopropoxysilane, tetrapropoxysilane, tetrabutoxysilane, tetrakis(2-methoxyethoxy) silane and tetrakis(2-ethylhexoxy) silane.

The amount of the TAOS compound is such that the molar ratio of the TAOS compound to Mg is 0.40 to 1.00, preferably 0.50 to 0.80, more preferably 0.55 to 0.75 and most preferably 0.66. For the preparation of higher density (at least 0.94 g/cc) polymers and copolymers of ethylene, it was discovered that the catalyst exhibits higher activity when the catalyst is prepared with a total [TAOS]:[Mg] molar ratio at the minimum end of the range of 0.4 to 1.0, that is, at 0.4 rather than at 1.0.

Formation of the contact mixture of the organomagnesium compound, the TAOS compound and the inert solvent with subsequent slurrying of the carrier therein obviates the necessity of equipment requiring high-mixing capabilities for the commercial scale-up of catalyst production. Therefore, the present synthetic method particularly allows for a complete contact of all components on any scale. The mixture of the organomagnesium compound, the TAOS compound and the inert solvent is prepared first and subsequently the silica carrier is slurried therein prior to precipitation of any components from the solution. The total amount of the TAOS compound may be added in one step to form the liquid mixture.

Finally, the slurry is contacted with TiCl₄, which is soluble in the non-polar solvent. This synthesis step is typically conducted at 25 to 70°C, preferably at 30 to 65°C, and most preferably at 45 to 60°C. In a preferred embodiment, the amount of TiCl₄ added is not greater than that which can be deposited onto the carrier. The exact molar ratio of Mg to Ti will therefore vary (depending, e.g., on the silica carrier drying temperature) and must be determined on a case-by-case basis. For example, for a silica carrier heated at 200 to 850°C, the amount of TiCl₄ used is typically such that the molar ratio of Ti derived from TiCl₄ to the hydroxyl groups of the carrier is 1 to 2.0, preferably 1.3 to 2.0. The amount of the transition metal compound is also such that the molar ratio of Ti to Mg is 0.7 to 1.4, preferably 1 to 1.4. These molar ratios provide catalyst compositions which produce HDPE and LLDPE resins having low melt flow ratio values typically of 20 to 30. In particular, catalysts made by the process of the invention allow for the production of LLDPE resins characterized by MFR values less than 27. Film made of these LLDPE products exhibits excellent dart drop impact resistance and enhanced MD Elmendorf tear strength. As is known to those skilled in the art, such LLDPE resins can be utilized to produce high-strength film or injection molding products which are resistant to warping and shrinking. Preferred solvents for the TiCl₄ used herein are isohexane or isopentane.

The solution of TiCl₄ is added to the slurry containing solid carrier and is typically also heated to a suitable reaction temperature, e.g., to the reflux temperature of the solvent. The supported catalyst precursor formed from the four components described above is then activated with trialkylaluminium activators. Preferably, the activators are trialkylaluminum compounds which contain alkyl groups of 1 to 6 carbon atoms, preferably 1 to 4 carbon atoms. More preferably, the activators are triethylaluminum or trimethylaluminum. The most active catalyst is formed when the activator is trimethylaluminum.

The catalyst may be activated in situ by adding the activator and catalyst precursor separately to the polymerization medium. It is also possible to combine the catalyst precursor and activator before introduction into the polymerization medium, e.g., for up to 2 hours at a temperature from -40 to about 80°C.

A suitable amount of the activator expressed as the number of moles of the activator per gram atom of titanium in the catalyst may be from 1 to 100 and is preferably greater than 5.

Ethylene and alpha-olefins, for instance those containing 3 to 10 carbon atoms, may be copolymerized with the catalysts prepared according to the process of the present invention by any suitable process. Such processes include polymerization reactions carried out in suspension, in solution or in the gas phase. Gas phase polymerizations are preferred such as those taking place in stirred bed reactors and, especially, fluidized bed reactors. With the catalysts produced according to aspects of the present invention, molecular weight of the polymers may be suitably controlled with hydrogen when the polymerization is carried out at relatively low temperatures, e.g., from about 30 to about 105°C. This control of molecular weight may be evidenced by a positive change in melt indexes (I₂ and I₂₁) of the polymer. The catalysts prepared according to aspects of the present invention are highly active and may have an activity of at least from about 3,000 to about 10,000 gram of polymer produced per hour per gram of catalyst per 689kPa (100 psi) of ethylene pressure.

The catalysts prepared according to aspects of the present invention are particularly useful for the production of HDPE and LLDPE resins with densities below of 0.96. The LLDPE resins may have a density of 0.94 g/cm³ or less, preferably 0.930 or less or even 0.925 g/cm³ or less. In accordance with certain aspects of the present invention, it is possible to achieve densities of less than 0.915 g/cm³ and even 0.900 g/cm³.

These LLDPE resins may be polymers of ethylene with one or more C₃-C₁₀ alpha-olefins. Thus, copolymers having two monomeric units are possible as well as terpolymers having three monomeric units. Particular examples of such polymers include ethylene/1-butene copolymers, ethylene/1-hexene copolymers, ethylene/4-methyl-1-pentene copolymers, ethylene/1-butene/1-hexene terpolymers, ethylene/propylene/1-hexene terpolymers and ethylene/propylene/1-butene terpolymers.

The term MFR is a ratio of I₂₁/I₂; I₂ is measured according to ASTM D-1238, Condition E, measured at 190°C and reported as grams per 10 minutes; whereas I₂₁ is measured according to ASTM D-1238 Condition F, measured at 10.5 times the weight used in the measurement of I₂.

The molecular weight distribution of the polymers prepared in the presence of the catalysts of the present invention, as expressed by the MFR value, varies from about 20 to 30, and is preferably 24-28, for LLDPE products having a density of 0.900 to 0.940 g/cm³ and an I₂ (value) of 0.1 to 100. As is known to those skilled in the art, such MFR values are indicative of a relatively narrow molecular weight distribution of the polymers. The relatively low MFR values of polymers prepared with the catalysts of this invention also indicate that they are suitable for the preparation of various film products since such films are likely to have excellent strength properties.

Ethylene copolymers produced in accordance with certain aspects of the present invention preferably contain at least 80 percent by weight of ethylene units. Most preferably, the LLDPE resins of the invention contain at least 2 weight percent, for example from 2 to 20 weight percent of an alpha-olefin.

Preferably, the polymerization reaction is conducted by contacting a stream of the monomers, in a low pressure gas-phase process, such as in the low pressure fluidized bed process with a catalytically effective amount of the completely activated catalyst at a temperature and at a pressure sufficient to initiate the polymerization reaction.

In order to achieve the desired density ranges in the copolymers it is necessary to copolymerize enough of the alpha-olefin comonomers with ethylene to achieve a level of 1 to 5 mol percent of the C₄ to C₈ comonomer in the copolymer. The amount of comonomer needed to achieve this result will depend on the particular comonomer(s) employed.

It has unexpectedly been found that using catalysts of the invention in a gas-phase catalytic polymerization reaction, 1-hexene can be incorporated into ethylene copolymer chains with a high efficiency: a relatively small concentration of 1-hexene in the gas phase can lead to a relatively large incorporation of 1-hexene into the copolymers. Thus, 1-hexene can be incorporated into an ethylene copolymer chain in a gas-phase reactor in amounts up to 15 percent by weight, preferably 4 to 12 percent by weight, to produce LLDPE resins having a density of less than 0.940 g/cm³.

In gas-phase polymerization in a fluidized-bed reactor, the polymerization temperature should be held below the sintering temperature of polymer particles. For the production of ethylene copolymers in the process of the present invention, an operating temperature of 30° to 115°C is preferred and a temperature of 75° to 95°C is most preferred. Temperatures of 75° to 90°C are used to prepare LLDPE products having a density of 0.91 to 0.92, temperatures of 80° to 100°C are used to prepare LLDPE products having a density of 0.92 to 0.94, and temperatures of 90° to 115°C are used to prepare HDPE products having a density of 0.94 to 0.96.

The fluidized-bed reactor is operated at pressures of less than 7000kPa (70 bars), with operation at the higher pressures in such ranges favoring heat transfer since an increase in pressure increases the unit volume heat capacity of the gas. The partially or completely activated catalyst composition is injected into the bed at a rate equal to its consumption. The production rate in the bed is controlled by the rate of the catalyst injection. The feed stream of gaseous monomer, with or without inert gaseous diluents, is fed into the reactor at a space time yield of 34 to 168 kg/hour/m³ (2 to 10 pounds/hour/cubic foot) of the bed volume.

Resins produced with catalysts of the invention exhibit excellent mechanical properties. Although there may be differences in catalyst productivity and 1-hexene incorporation, which vary with the type of the trialkylaluminum activator used in the gas-phase fluidized-bed reactor, excellent mechanical properties of the LLDPE resins inhere in the catalyst precursors of the invention independently of the identity of the cocatalyst.

The LLDPE film exhibits unexpectedly high dart drop impact strength and enhanced MD Elmendorf tear strength compared to commercial standards.

Slot-cast films formed from ethylene/1-hexene LLDPE resins with density of from 0.916 to 0.92 g/cm³ have especially desirable properties as pallet stretch wrap.

The following Examples illustrate the present invention.

### EXAMPLES

EXAMPLE 1 - 24.7 g of dry heptane was added under a dry nitrogen atmosphere to a 100 ml pear flask containing a magnetic stirring bar. 8.2 ml of a 0.736 molar solution of dibutylmagnesium (6.04 mmol) in heptane was added at room temperature to the flask followed by the addition of 1.34 ml of neat tetraethyl orthosilicate (6.00 mmol). The contents of the flask were stirred for 50 min. and then 6.09 g of Davison-grade 955 silica (previously calcined at 600°C for twelve hours) was added to the flask. The flask was placed into an oil bath held at 55-60°C and stirring continued for 50 min. Next, 2.2 ml of a 2.717 molar solution of titanium tetrachloride (5.98 mmol) in heptane was added to the flask and stirring continued for 40 min. Finally, the heptane was removed by evaporation with a nitrogen purge and 9.96 g of a free-flowing catalyst powder was obtained.
EXAMPLE 2 - Typical polymerization conditions were as follows: A 1.6-liter stainless-steel autoclave at 48°C was filled with 0.50 1 of dry heptane and 0.175 1 of dry 1-hexene, and 3.0 mmol of trimethylaluminum (TMA) was added to the reactor while under a slow nitrogen purge. Then the reactor vent was closed, the stirring rate was set at 900 rpm, the internal temperature was increased to 80°C, and the internal pressure was raised with hydrogen from 35 to 175 kPa (from 0.35 bar to 1.75 bar). Ethylene was introduced to maintain the pressure at 827 kPa (120 psig). Next, 0.0367 g of catalyst precursor of EXAMPLE 1 was introduced into the reactor with ethylene over-pressure and the temperature was increased and held at 85°C. The polymerization reaction was continued for 60 min, then the ethylene supply was stopped and the reactor was cooled to room temperature. A yield of 127.1 g of polyethylene was collected. Flow index (I₂₁) of this polymer was 26.0 and the MFR value was 25.2. The polymer contained 2.45 mol% 1-hexene.

## Claims

1. A process for forming a catalyst composition for copolymerizing ethylene and an alpha-olefin of 3 to 10 carbon atoms comprising a catalyst precursor and a trialkylaluminum cocatalyst to activate said catalyst precursor, wherein the precursor formation process comprises
(i) preparing a contact mixture of an inert solvent, dialkylmagnesium compound and tetraalkyl orthosilicate, which is free of precipitate wherein the alkyl groups of said dialkylmagnesium compound contain 4 to 10 carbon atoms; and wherein the alkyl groups of said tetralkyl orthosilicate contain 1 to 10 carbon atoms;
(ii) adding silica to said contact mixture to form a slurry, wherein said adding is undertaken prior to formation of a precipitate in said contact mixture,
wherein the silica has 0.4 to 0.9 mmol of OH groups per gram of silica;
wherein the dialkylmagnesium compound is added in step (i) in an amount to provide a molar (Mg):(OH) ratio of 1.0 to 1.8 and
wherein the tetraalkyl orthosilicate is added in step (i) in an amount to provide a (tetraalkyl orthosilicate):(Mg) molar ratio of 0.40 to 1.00;
(iii) heating the slurry of step (ii) with stirring, to a temperature in the range of 40 to 65°C,
(iv) adding TiCl₄ to the heated slurry of step (iii) in an amount to provide a molar (Ti):(Mg) ratio of 0.7 to 1.4.

2. The process of Claim 1, wherein the catalyst precursor composition is **characterized by** a K value, which is defined as K = (Ti)/{(Mg)+4(Si)}, wherein (Ti) is titanium molar concentration provided by TiCl₄, (Mg) is magnesium molar concentration provided by dibutylmagnesium; (Si) is the silicon molar concentration provided by tetraethyl orthosilicate, and K is in the 0.23 to 0.31 range.

3. The process of claim 1 wherein the dialkylmagnesium is dibutylmagnesium.

4. A catalyst composition obtainable by a process as defined in any of claims 1 to 3.

## Patentansprüche

1. Verfahren zum Bilden einer Katalysatorzusammensetzung zum Copolymerisieren von Ethylen und einem Alpha-Olefin mit 3 bis 10 Kohlenstoffatomen, umfassend einen Katalysatorvorläufer und einen Trialkylaluminium-Cokalatysator zum Aktivieren des Katalysatorvorläufers, wobei das Verfahren zum Bilden des Vorläufers Folgendes umfasst:
(i) das Herstellen einer Kontaktmischung Aaus einem inerten Lösungsmittel, einer Dialkylmagnesiumverbindung und Tetraalkylorthosilicat, die von Ausfällungsstoff frei ist, wobei die Alkylgruppen der Dialkylmagnesiumverbindung 4 bis 10 Kohlenstoffatome enthalten; und wobei die Alkylgruppen des Tetraalkylorthosilicats 1 bis 10 Kohlenstoffatome enthalten;
(ii) das Hinzusetzen von Siliciumdioxid zur Kontaktmischung unter Bildung einer Aufschlämmung, wobei das Hinzusetzen vor der Bildung einer Ausfällung in der Kontaktmischung durchgeführt wird,
wobei das Siliciumdioxid 0,4 bis 0,9 mMol OH-Gruppen pro Gramm Siliciumdioxid aufweist;
wobei die Dialkylmagnesiumverbindung in Schritt (i) in einer Menge hinzugesetzt wird, um ein Molverhältnis von (Mg) : (OH) von 1,0 bis 1,8 bereitzustellen und wobei das Tetraalkylorthosilicat in Schritt (i) in einer Menge hinzugesetzt wird, um ein Molverhältnis von (Tetraalkylorthosilicat) : (Mg) von 0,40 bis 1,00 bereitzustellen:
(iii) das Erhitzen der Aufschlämmung aus Schritt (ii) unter Rühren auf eine Temperatur im Bereich von 40 bis 65 °C,
(iv) das Hinzusetzen von TiCl₄ zu der erhitzten Aufschlämmung aus Schritt (iii) in einer Menge, um ein Molverhältnis von (Ti) : (Mg) von 0,7 bis 1,4 bereitzustellen.

2. Verfahren nach Anspruch 1, wobei die Katalysatorvorläuferzusammensetzung durch einen K-Wert **gekennzeichnet** ist, der als K = (Ti)/(Mg)+4(Si)) definiert ist, wobei (Ti) die durch TiCl₄ bereitgestellte molare Titankonzentration ist, (Mg) die durch Dibutylmagnesium bereitgestellte molare Magnesiumkonzentration ist; (Si) die durch Tetraethylorthosilicat bereitgestellte molare Siliciumkonzentration ist und K im Bereich von 0,23 bis 9,31 liegt.

3. Verfahren nach Anspruch 1, wobei das Dialkylmagnesium Dibutylmagnesium ist.

4. Katalysatorzusammensetzung, die durch ein Verfahren wie in einem der Ansprüche 1 bis 3 definiert erhältlich ist.

## Revendications

1. Processus pour former une composition de catalyseur servant à copolymériser de l'éthylène et une alpha-oléfine de 3 à 10 atomes de carbone comprenant un précurseur de catalyseur et un cocatalyseur de trialkylaluminium pour activer ledit précurseur de catalyseur, le processus de formation de précurseur consistant à :
(i) préparer un mélange de mise en contact avec un solvant inerte, un composé de magnésium-dialkyle et de l'orthosilicate-tétraalkyle, qui est exempt de précipitat, dans lequel les groupes alkyle dudit composé magnésium-dialkyle contiennent 4 à 10 atomes de carbone et dans lequel les groupes alkyle dudit orthosilicate-tétraalkyle contiennent 1 à 10 atomes de carbone;
(ii) ajouter de la silice audit mélange de mise en contact pour former un coulis,
dans lequel ledit ajout est entrepris avant la formation d'un précipitat dans ledit mélange de mise en contact,
dans lequel la silice contient 0,4 à 0,9 mmol de groupes OH par gramme de silice ;
dans lequel le composé de magnésium-dialkyle est ajouté à l'étape (i) dans une quantité donnant un rapport molaire (Mg):(OH) de 1,0 à 1,8 et dans lequel l'orthosilicate-tétraalkyle est ajouté à l'étape (i) dans une quantité donnant un rapport molaire (orthosilicate-tétraalkyle):(OH) de 0,40 à 1,00 ;
(iii) chauffer le coulis de l'étape (ii) en brassant à une température comprise entre 40 et 65 °C,
(iv) ajouter du TiCl₄ au coulis chauffé de l'étape (iii) dans une quantité donnant un rapport molaire (Ti):(Mg) de 0,7 à 1,4.

2. Procédé de la revendication 1, dans lequel la composition de précurseur de catalyseur se **caractérise par** une valeur K qui se définit par K = (Ti)/{(Mg)+4(Si)}, dans lequel (Ti) est la concentration molaire de titane fournie par le TiCl₄, (Mg) est la concentration molaire de magnésium fournie par le magnésium-dibutyle ; (Si) est la concentration molaire de silicium fournie par l'orthosilicate tétraéthyle, et K se situe entre des valeurs de 0,23 et 0,31.

3. Procédé selon la revendication 1, dans lequel le magnésium-dialkyle est du dibutyle de magnésium.

4. Composition de catalyseur pouvant être obtenue par un procédé tel que défini dans l'une quelconque des revendications 1 à 3.
